# EUROPEAN PATENT APPLICATION

(11) **EP 2 135 896 A1**
(43) Date of publication of application: **23.12.2009**
(21) Application number: 08104424.0
(22) Date of filing: 16.06.2008
(51) Int. Cl.: C08L 27/06

(54) **Polyvinyl alcohol as co-stabilizer for PVC**

(71) Applicant: Kuraray Europe GmbH, 65926 Frankfurt am Main (DE)
(72) Inventor: Fuss, Robert W. Dr., D-65835, Liederbach (DE); Michel, Samuel Dr., D-65715, Hofheim a Ts (DE)
(74) Representative: Kisters, Michael Marcus

(57) **Abstract**

Use of a polyvinyl alcohol having a degree of polymerization of less than 700 and a degree of hydrolysis of 75 to 95 mol% as co-stabilizer for thermoplastic processable PVC mixtures in combination with metal ions.

## Description

### Field of the invention

The present invention relates to thermoplastic processable mixtures based on polyvinyl chloride (PVC) which are stabilized with at least one metal ion in combination with polyvinyl alcohol having a low degree of polymerization and a medium degree of hydrolysis.

### Background

Thermoplastic processable mixtures based on PVC have to be stabilized against heat and/or UV-radiation in order to reduce chemical decomposition. Especially useful for this purpose are metal ions, for example lead or tin salts or the more ecofriendly calcium or zinc compounds. The metal based stabilizers should have a good dispersibility within the polymer matrix without showing agglomeration or incompatibility during the thermoplastic processing of the PVC-mixture. Furthermore, the stabilizers should not migrate to the surface of the processed material in order to prevent so called "plate-out" or "fish eye" disturbances. Therefore, most stabilizers for PVC contain a plurality of components like polyols, beta diketones, phenolic compounds or inorganic stabilizers. See, for example US 5,143,959.

The use of polyvinyl alcohol (PVA) in metal-based stabilizer mixtures for PVC is known. For example, US 5,118,741 discloses the use of partially hydrolyzed PVA during suspension polymerization of PVC in an amount of 0,5 phr at most and the stabilisation of the thus obtained PVC-mixture with metal ions. A co-stabilizing effect of the PVA is not mentioned in this publication. Furthermore, the amounts of PVA added are too low to expect any co-stabilizing effect.

DE 272 8 862 discloses a mixture of PVC, and Ca/Zn salts of a β-diketone with PVA as polyol compound without giving any details of the PVA used.

The thermal stability of PVC-mixtures containing PVA as co-stabilizer was further analysed by Ikeda et. al. in "Polymers and Polymer Composites", p 649 to 662, vol. 11 no. 8, 2003. In this paper, PVA having a high (>98 Mol%) or a low degree (<40 Mol%) of saponification in combination with high or low degree of polymerisation can be used as co-stabilizer for Zn-stabilized PVC mixtures.

The known PVA-containing stabilizer mixtures for PVC still have deficiencies in view of thermal stability and/or processability during the extrusion of PVC-mixtures.

Surprisingly, it was found that partially saponified polyvinyl alcohols having a low degree of polymerization and a medium degree of hydrolysis improve the thermal stability of PVC mixtures stabilized with metal ions and show sufficient compatibility with the polymer matrix.

Therefore, one aspect of the invention are thermoplastic processable mixtures based on polyvinyl chloride containing a stabilizer comprising at least one metal ion and polyvinyl alcohol, characterized by the addition of 0,1 to 15 parts of a polyvinyl alcohol having a degree of polymerization of less than 700 and a degree of hydrolysis of 75 to 95 mol% per 100 parts of polyvinyl chloride.

The mixtures according to the invention contain preferably 0,1 to 5 parts polyvinyl alcohol per 100 parts PVC. Preferably 0,1 to 1 phr, preferably 0,1 to 0,5 phr.

Preferably, the polyvinyl alcohol used in the present invention has a degree of polymerization of 100 to less than 700, especially 250 to 600 or even more preferred 350 to 250.

Furthermore, the degree of hydrolysis of the PVA is preferably between 75 and 90 mol% or more preferred between 80 and 90 mol%.

Stabilizer according to the invention is at least one metal ion selected from the group barium, zinc, calcium or tin, especially in the form of the respective organic or inorganic salts. Preferable "metal soaps", i.e. salts of carbon acids comprising 1 to 25 carbon atoms, especially stearates, laureates, maleates, oleates, or terephthalates or metal salts of acetyl acetone, a mercaptane or a β-diketones are used.

Especially useful is a stabilizer mixture derived from zinc and calcium salts, preferably the respective salts of β-diketones, acetyl acetone or carboxylic acids comprising 1 to 25 carbon atoms, preferable in a mixture of 1:1 to 1:4, especially 1:2 parts.

Furthermore, in PVC industry commonly used filling materials for example selected from the group consisting of TiO₂, CaCO₃, ZrO₂, Kaolin, Talcum, K/Al silicates, feldspar, silicate, barium sulphate, metal powder, graphite, calcium sulphate, ceramic and glass particles or wood may be added to the thermoplastic mixture in about 5 to 20 parts per hundred parts of polyvinyl chloride.

The addition of common plasticizers known to the PVC processing industry like dioctyl phthalate, diisononyl phthalate, or their hydrated derivates, dioctyl therephthalate, alkyladipates, alkylbenzoates, epoxidised alkyl ester or epoxidised vegetable oils like epoxidised soybean or linseed oil, each in 0,1 to 100 parts per 100 parts PVC is possible.

In the case of plasticizers like epoxidised soybean oil which are also contributing to the thermal stabilisation of the PVC, lower concentration may be employed and PVA may be added in amounts of about 0,01 to 10 phr of PVC.

Another object of the invention is a process for manufacture of thermoplastic processable mixtures based on polyvinyl chloride comprising at least one metal ion as stabilizer and 0,1 to 15 parts of a polyvinyl alcohol having a degree of polymerization of less than 700 and a degree of hydrolysis of 75 to 95 mol% per 100 parts of polyvinyl chloride by mixing the components at a temperature of at least 120 °C for example in an extruder or a kneader. Preferably, the mixing may be performed prior to or during a thermoplastic form shaping process at about 180 to 240 °C.

The optional thermoplastic form shaping process is usually performed with or in an extruder or calender for example by first melting the components during the feeding process at said temperatures and afterwards form shaping the mixture at elevated pressure.

The PVA can be added to the PVC as a powder or in form of a solution. This PVA solution can be prepared with water or with a suitable organic solvent or any mixture thereof (for example aqueous ethanol). The metal salts can be added as dry blend or also in form of a solution. Alternatively, all additives can be added alone or together (as "one pack formulation") to the PVC as dry blend, for example in an extruder, dry mill or kneader.

The use of said PVA as co-stabilizer in thermoplastic processable mixtures based on PVC containing at least one metal ion as stabilizer is further an object of the present invention.

Depending on the intended use of the thermoplastic mixture, different metal ions in different concentrations may be used.

Typically, PVC mixtures for bottles, tubes or profiles may contain 0,3 to 3 phr tin ions. For flexible PVC mixtures, like plastisoles Ba- and Zn-ions in a total amount of 1 to 3 phr are used. Ca/Zn mixtures in an total amount of 2-3.5 phr are used for floor coverings. Such mixtures and the amounts of metal ions are known in the PVC industry. In cases where epoxidised vegetable oils are employed it may even possible to reduce the amount of PVA and metal ions according to the invention without imparing thermal stabilization.

Thermoplastic processable mixtures according to the invention are especially useful for the production of window or door profiles, films, coatings, sheets, tubes, cables, floorings, bottles, or floor coverings.

### Example

Samples comprising the components according to table 1 were prepared by the following steps:
- 1% of PVA was dissolved in water.
- PVC was added to the solution, and then dried at 50°C for 8 hrs
- To the PVC/PVA mixture, DOP (Dioctyl phthalate), Zn-stearate and Ca-stearate were added and dry blended
- 60 g of the resulting mixture was milled using an open roll at 160°C for 5 min.

The obtained mixture was pressed into sheets of 50 x 70 mm with a thickness of about 0,45 mm. The sheets were subsequently heated to 180 °C in an oven and the whiteness of the heated sheets was measured at room temperature using a colorimeter.

A differential colorimeter (Model SM-T-H1 colour computer, Suga Shikenki Co., Ltd) with SC-T(P),SM-T(P),ver8.00 software, mounting a specimen holder window 30 mm in diameter was used to measure the whiteness level.

The whiteness values show the co-stabilizing effect of the polyvinyl alcohol used.

| Example | DP | DH | Heating time [min] and whiteness level [%] | | | | | | | | |
|---|---|---|---|---|---|---|---|---|---|---|---|
| | | | 0 | 30 | 45 | 60 | 90 | 105 | 120 | 135 | 150 |
| Comparative example 1 | 2400 | 98,5 | 91,8 | 89,6 | 28,4 | 0 | | | | | |
| Comparative example 2 | 500 | 98,5 | 92,6 | 89,6 | 43,1 | 0 | | | | | |
| Comparative example 3 | 2400 | 88 | 91,9 | 89.0 | 77.7 | 61.2 | 22.2 | 0 | | | |
| Example 1 | 500 | 88 | 92,5 | 92,0 | 89,5 | 87,2 | 84,8 | 83,1 | 75,5 | 27,8 | 0 |
| Example 2 | 500 | 75 | 92,3 | 91,9 | 89,5 | 87,1 | 82,8 | 61,4 | 0,0 | | |
| Example 3 | 300 | 88 | 92,0 | 90,2 | 89,3 | 88,6 | 83,7 | 83,1 | 74,1 | 56,2 | 0,0 |
| Example 4 | 300 | 80 | 92,7 | 90,4 | 89,9 | 88,8 | 84,0 | 83,4 | 71,5 | 0,0 | |
| Example 5 | 300 | 75 | 91,9 | 91,0 | 89,3 | 88,7 | 84,4 | 84,1 | 69,9 | 0,0 | |

As can be seen from the table, polyvinyl alcohols according to the invention have an improved stabilizing effect as compared to polyvinyl alcohols known from prior art.

## Claims

1. Thermoplastic processable mixture based on polyvinyl chloride containing a stabilizer comprising at least one metal ion and polyvinyl alcohol, **characterized by** the addition of 0,1 to 15 parts of a polyvinyl alcohol having a degree of polymerization of less than 700 and a degree of hydrolysis of 75 to 95 mol% per 100 parts of polyvinyl chloride.

2. Thermoplastic processable mixture according to claim 1, **characterized in that** the polyvinyl alcohol has a degree of hydrolysis of 80 to 90 mol%.

3. Thermoplastic processable mixture according to claim 1 or 2, **characterized in that** as stabilizer at least one metal ion selected from the group barium, zinc, calcium or tin is used.

4. Thermoplastic processable mixture according to any of the claims 1 to 3, **characterized in that** as stabilizer a mixture of zinc and calcium salts of a carboxylic acid comprising 1 to 25 carbon atoms, of acetyl acetone or a β-diketone is used.

5. Thermoplastic processable mixture according to one of the claims 1 to 4 **characterized in that** the mixture contains 5 to 20 parts per 100 parts of polyvinyl chloride of a filler material selected from the group consisting of TiO₂, CaCO₃, ZrO₂, Kaolin, Talcum, K/Al silicates, feldspar, silicate, barium sulphate, metal powder, graphite, calcium sulphate, ceramic and glass particles or wood.

6. Thermoplastic processable mixture according to any of the claims 1 to 5 **characterized in that** the polyvinyl alcohol has a degree of polymerization of 100 to less than 700.

7. Thermoplastic processable mixture according to any of the claims 1 to 6 **characterized in that** the polyvinyl alcohol has a hydrolysis of 75 to 90 mol%.

8. Process for the production of the thermoplastic processable mixtures according to one of the claims 1 to 7 by mixing the components at a temperature of least 120 °C.

9. Process according to claim 8 **characterized in that** the mixing is obtained during thermoplastic form shaping process at 180 to 240 °C

10. ruse of the thermoplastic processable mixture according to any of the claims 1 to 8 for the production of window or door profiles, films, coatings, sheets, tubes, cables, floorings, bottles, or floor coverings.
